(19) Europäisches Patentamt
European Patent Office
Office européen des brevets

(11) **EP 4 303 255 A1**

(12) **EUROPÄISCHE PATENTANMELDUNG**

(43) Veröffentlichungstag:
**10.01.2024   Patentblatt 2024/02**

(21) Anmeldenummer: **22183494.8**

(22) Anmeldetag: **07.07.2022**

(51) Internationale Patentklassifikation (IPC):
*C08J 11/04* (2006.01)   *B01D 61/14* (2006.01)
*B01D 61/16* (2006.01)

(52) Gemeinsame Patentklassifikation (CPC):
**B01D 61/145; B01D 61/16;** B01D 2311/25

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(71) Anmelder: **RAMPF Eco Solutions GmbH & Co. KG
66954 Pirmasens (DE)**

(72) Erfinder: **KUGLER, Michael
66954 Pirmasens (DE)**

(74) Vertreter: **Weickmann & Weickmann PartmbB
Postfach 860 820
81635 München (DE)**

(54) **AUFARBEITUNG VON KUNSTSTOFFSOLVOLYSEGEMISCHEN**

(57)   Die vorliegende Erfindung betrifft ein Verfahren zur Auftrennung eines Kunststoffsolvolysegemischs umfassend Kunststoffabbauprodukt, Lösungsmittel und Katalysator mittels Membranfiltration. Die erhaltenden Fraktionen können recycelt werden und beispielsweise erneut zur Solvolyse von Kunststoffen bzw. als Rohstoffe zur Herstellung von Kunststoffen verwendet werden.

EP 4 303 255 A1

**Beschreibung**

Die vorliegende Erfindung betrifft ein Verfahren zur Auftrennung eines Kunststoffsolvolysegemischs umfassend Kunststoffabbauprodukt, Lösungsmittel und Katalysator mittels Membranfiltration. Die erhaltenden Fraktionen können recycelt werden und beispielsweise erneut zur Solvolyse von Kunststoffen bzw. als Rohstoffe zur Herstellung von Kunststoffen verwendet werden.

Kunststoffe sind allgegenwärtige Werkstoffe und werden unter anderem als Verpackungsmaterialien, Fasern, Isolierungen, Schaumstoffe und Konstruktionswerkstoffe, z.B. im Fahrzeugbau, intensiv genutzt. Üblicherweise basieren Kunststoffe auf petrochemischen Ausgangsprodukten. Insbesondere in Zeiten zunehmender Ressourcenknappheit, aber auch in Hinblick auf die Problematik steigender Umweltverschmutzung gewinnen Recyclingverfahren vermehrt an Bedeutung.

Recycling von Kunststoffen kann den mechanischen, thermischen oder chemischen Abbau von Kunststoffen umfassen. Beim chemischen Abbau werden die Kunststoffe durch chemische Reaktion in ihre Monomere zersetzt, die als Edukte in einer Vielzahl an chemischen Verfahren wiederverwendet werden können. Die wirtschaftliche Bedeutung des chemischen Recyclings ist jedoch durch den Prozessaufwand und die verbundenen Kosten limitiert. Insbesondere sind aufwändige Aufreinigungsprozesse nötig, um die erzeugten Kunststoffabbauprodukte und die eingesetzten Chemikalien wie Lösungsmittel und Katalysatoren zu trennen.

Bekannt ist der Abbau von Kunststoffen und Kunststoffabfällen mittels Solvolyse (wie Glykolyse, Alkoholyse, Acidolyse, Aminolyse, Hydrolyse) unter Zusatz von niedermolekularen Spaltreagenzien wie Glykolen, Alkoholen, Säuren, Aminen bzw. Wasser. Die Spaltreagenzien werden dabei in der Regel im Überschuss eingesetzt um eine möglichst quantitative Umsetzung zu erhalten. Die dabei entstehenden Kunststoffsolvolysegemische sind Gemische aus unterschiedlichen, niedermolekularen Kunststoffabbauprodukten und enthalten ferner eingesetzte Spaltreagenzien.

Kunststoffsolvolysegemische werden teilweise als Gemisch, inklusive überschüssigem Spaltreagenzien, als Rohstoff eingesetzt. Beispielsweise werden Polyurethan (PUR)-Hartschaum-Abfälle mittels Glykolen solvolysiert. Das dabei entstehende Gemisch aus Etherpolyolen, Urethanen und freiem Glykol wird als Rohstoff bei der PUR-Hartschaumherstellung prozentual zugesetzt. Der Einsatz dieser Kunststoffsolvolysegemische ist jedoch stark beschränkt, da die überschüssigen Spaltreagenzien bei der späteren Anwendung stören. Ebenfalls stören Nebenprodukte des Kunststoffabbaus sowie Katalysator, der bei der Solvolyse in der Regel zugegeben werden muss um einen ausreichenden Kunststoffabbau zu gewährleisten.

Es besteht daher der Bedarf, das Recycling von Kunststoffen zu verbessern und insbesondere Verfahren bereitzustellen, bei denen die Kunststoffabbauprodukte geringere Spaltreagenz-Restgehalte und geringere Mengen an Katalysator und Nebenprodukten aufweisen.

Um den Spaltreagenz-Restgehalt zu reduzieren wurde deshalb das Spaltreagenz teilweise im Unterschuss zugesetzt. Damit wird zwar der Gehalt an Spaltreagenz im Kunststoffsolvolysegemische geringfügig reduziert, allerdings sind die dabei entstehenden Gemische höherviskos bzw. hochmolekular und liegen weiterhin als Gemisch mit Restgehalten an Katalysator und Abbaunebenprodukten vor.

Das Kunststoffsolvolysegemisch kann auch einer Destillation unterzogen werden, um den Gehalt an Spaltreagenz zu reduzieren. Allerdings liegen die Kunststoffsolvolysegemische nach Destillation immer noch als unvorteilhafte Gemische von Kunststoffabbauprodukten vor und können gegebenenfalls erhöhte Katalysator-Gehalte aufweisen. Destillative Trennverfahren weisen ferner die Nachteile auf, dass nur verdampfbare Reagenzien abgetrennt werden können und zusätzlich durch die thermische Belastung Nebenreaktionen auftreten, deren Produkte bei der Weiterverarbeitung störend sind.

Auch dieser Ansatz hat den Nachteil, dass Kunststoffsolvolysegemische nicht ausreichend getrennt bzw. zu höheren Reinheiten aufgearbeitet werden können, um in bedeutenden Mengen als Rohstoff in der chemischen bzw. Kunststoff-Industrie eingesetzt werden können. Aufgrund dessen konnten sich Verfahren wie z.B. die Hydrolyse von Kunststoffen bisher nie wirtschaftlich durchsetzen.

Ebenso war es bisher nicht möglich, den bei der Solvolyse teilweise in größeren Mengen eingesetzten Katalysator wiederzuverwenden. Um zumindest eine teilweise Entfernung des Katalysators aus dem Kunststoffsolvolysegemisch in den oben beschriebenen Verfahren zu erreichen, wird der Katalysator oftmals neutralisiert (z.B. hydrolysiert), mittels Destillation oder Filtration abgetrennt und entsorgt.

Trotz der hohen Relevanz von Verfahren zum Abbau von Kunststoffen mangelt es zum aktuellen Zeitpunkt an Verfahren, die unter wirtschaftlichen Bedingungen die Auftrennung von Kunststoffsolvolysegemischen in ausreichend reine Kunststoffabbauprodukte und die Wiedergewinnung von Solvolysereagenzien wie Katalysator und/oder Spaltreagenz (Lösungsmittel) ermöglichen.

Ziel der vorliegenden Erfindung ist es daher, ein Verfahren bereitzustellen, das mit einfachen Mitteln die Auftrennung von Kunststoffsolvolysegemischen ermöglicht. Dabei ist insbesondere eine Reduktion der Prozesskosten, beispielsweise durch Wiederverwendung von Solvolysereagenzien wie Katalysator und/oder Lösungsmittel von Interesse. Ferner zielt das erfindungsgemäße Verfahren auf eine verbesserte Auftrennung von Kunststoffsolvolysegemischen ab, wodurch eine verbesserte Weiterverarbeitung der gewonnenen Kunststoffabbauprodukte ermöglicht und die damit verbundene Wertschöpfung gesteigert wird.

Es wurde überraschenderweise gefunden, dass mittels Membranfiltration eine deutlich verbesserte Auftrennung von Kunststoffsolvolysegemischen möglich ist. Die dadurch erhaltenen Kunststoffabbauproduktfraktionen weisen eine höhere Reinheit als konventionell erhaltene Kunststoffabbauproduktfraktionen auf und können somit in größerem Umfang als Rohstoff, beispielsweise zur Herstellung von Kunststoffen, eingesetzt werden. Ferner können Lösungsmittel und Katalysator mit verringertem Aufwand abgetrennt und zudem wieder dem Kunststoffabbauprozess zugeführt werden. Insbesondere vorteilhaft ist, dass die bei der Solvolyse eingesetzten Katalysatoren wie Natriummethylate, Kaliumacetate und Titanate ohne deren vorherige Zersetzung abgetrennt werden können. Somit können sie recycelt und beispielsweise wieder dem Kunststoffabbauprozess zugeführt werden.

Somit erlaubt das erfindungsgemäße Verfahren eine einfache, effektive Abtrennung von Spaltreagenzien sowie des Katalysators in weiterhin aktiver Form. Neben erhöhter Wirtschaftlichkeit des Verfahrens ermöglicht dies, Spaltreagenzien und Katalysator im Überschuss bei der Kunststoffsolvolyse einzusetzen und somit die Solvolyse-Reaktion quantitativer und deutlich schneller auch bei niedrigeren Temperaturen ablaufen zu lassen.

Ein erster Aspekt der vorliegenden Erfindung betrifft daher ein Verfahren zur Auftrennung eines Kunststoffsolvolysegemischs umfassend die folgenden Schritte:

a) Bereitstellen eines flüssigen Kunststoffsolvolysegemischs umfassend Kunststoffabbauprodukt, Lösungsmittel und Katalysator,

b) Durchführen einer Membranfiltration des in Schritt a) bereitgestellten Kunststoffsolvolysegemischs bei einer Temperatur von 5-300°C, bevorzugt 50-200°C, und einem Druck von 2-150 bar, bevorzugt 5-100 bar, um einen Filtrationsrückstand A und ein Filtrat B zu gewinnen,

wobei das Gewichtsverhältnis Katalysator : Kunststoffabbauprodukt in dem in Schritt b) gewonnenen Filtrat B höher ist als in dem in Schritt a) bereitgestellten Kunststoffsolvolysegemisch.

Das in Schritt a) bereitgestellte Kunststoffsolvolysegemisch umfasst Kunststoffabbauprodukt, Lösungsmittel und Katalysator. Bevorzugt liegt das flüssige Kunststoffsolvolysegemisch in Form einer Lösung vorliegt. In einer Ausführungsform wird das in Schritt a) bereitgestellte Kunststoffsolvolysegemisch vor Schritt a) einer Fest/Flüssig-Filtration unterzogen.

Der hierin verwendete Ausdruck "Kunststoffsolvolysegemisch" bedeutet, dass das bereitgestellte Gemisch durch Solvolyse von Kunststoff erhalten ist. Solvolysereaktionen von Kunststoffen sind dem Fachmann bekannt und umfassen beispielsweise eine Glykolyse, Alkoholyse, Acidolyse, Aminolyse oder Hydrolyse von Kunststoff. Die Solvolysereaktion erfolgt unter Zusatz von Solvolyse-Spaltreagenzien wie Glykolen (bei der Glykolyse), Alkoholen (bei der Alkoholyse), Säuren (bei der Acidolyse), Aminen (bei der Aminolyse) oder Wasser (bei der Hydrolyse). Der Kunststoff kann aus der Gruppe, bestehend aus Polyurethan, Polyester, Polyetherester, Polyamid, Polycarbonat, Polyisocyanurat oder einer Mischung davon ausgewählt sein. In einer bevorzugten Ausführungsform kann der Kunststoff aus der Gruppe, bestehend aus Polyurethan und/oder Polyester, insbesondere Polyurethan, ausgewählt sein.

Das durch Solvolyse erhaltene Kunststoffabbauprodukt kann aus Polyaminen, Polyolen, Carbamaten, Polycarbonsäuren, Polycarbonsäureestern, Hydroxy-Carbonsäuren, Hydroxy-Carbonsäureestern oder Mischungen davon ausgewählt sein. Vorzugsweise ist das Kunststoffabbauprodukt ausgewählt aus Polyaminen, Polyolen, Carbamaten, Polycarbonsäuren und/oder Polycarbonsäureestern. In einer bevorzugten Ausführungsform umfasst das Kunststoffabbauprodukt mindestens ein Polyol und mindestens ein Polyamin.

Das Kunststoffabbauprodukt kann ein gewichtsmittleres Molekulargewicht von 30-20.000 g/mol, bevorzugt 50-10.000 g/mol, insbesondere 100-5.000 g/mol aufweisen.

Der Gehalt an Kunststoffabbauprodukt in dem bereitgestellten Kunststoffsolvolysegemisch kann beispielsweise bis zu 70 Gew,%, bevorzugt 5-60 Gew.%, wie 5-20 Gew.%, insbesondere bei einem Glykolysegemisch, oder 40-60 Gew.%, insbesondere bei einem Alkoholysegemisch, bezogen auf das Gesamtgewicht des Gemischs betragen.

In einer Ausführungsform umfasst das Kunststoffabbauprodukt mindestens ein Polyol, insbesondere wenn der solvolysierte Kunststoff ein Polyurethan und/oder Polyester ist. Der Begriff "Polyol" bezieht sich auf Verbindungen mit mindestens 2, das heißt 2, 3, 4 oder mehr, Hydroxygruppen. Ein Polyol im Sinne der Erfindung ist bevorzugt ein Polyetherpolyol, insbesondere aliphatisches, z.B. Polyethylenglykol oder Polypropylenglykol, oder aromatisches Polyetherpolyol, Polyesterpolyol, insbesondere aliphatisches oder aromatisches Polyesterpolyol, Diethylenglykol, Dipropylenglykol, C1-6-Alkylenglykol, insbesondere Hexandiol, Butandiol, Ethylenglykol und Neopentylglykol, C1-8-Alkylenpolyol, insbesondere Trimethylolpropan und Glycerin, oder eine Mischung davon.

In einer Ausführungsform umfasst das Kunststoffabbauprodukt mindestens eine Polycarbonsäure, insbesondere wenn der solvolysierte Kunststoff ein Polyester ist. Eine Polycarbonsäure im Sinne der Erfindung kann beispielsweise eine aromatische Polycarbonsäure, bevorzugt Phthalsäure oder Terephthalsäure, oder eine aliphatische Polycarbonsäure, bevorzugt C1-12-Alkylendicarbonsäure, stärker bevorzugt C1-6-Alkylendicarbonsäure, z.B. Adipinsäure, Bernsteinsäure oder Glutarsäure, Ester oder Mischungen davon umfassen.

In einer Ausführungsform umfasst das Kunststoffabbauprodukt mindestens eine Hydroxy-funktionalisierte Carbonsäure, insbesondere wenn der solvolysierte Kunststoff ein Polyester ist. Eine Hydroxy-funktionalisierte Carbonsäure im Sinne der Erfindung kann beispielsweise eine Hydroxyhexamethylencarbonsäure, eine Hydroxypopansäure wie Milchsäure, eine Hydroxyfettsäure oder Hydroxybuttersäure umfassen.

In einer Ausführungsform umfasst das Kunststoffabbauprodukt mindestens ein Polyamin, insbesondere wenn der solvolysierte Kunststoff ein Polyamid und/oder ein Polyurethan ist. Der Begriff "Polyamin" bezieht sich auf Verbindungen mit mindestens 2, das heißt 2, 3, 4 oder mehr, bevorzugt 2 oder 3, Aminogruppen. Ein Polyamin im Sinne der Erfindung kann beispielsweise ein aromatisches Diamin, bevorzugt 2,4-Diaminotoluol, 2,6-Diaminotoluol, 4,4'-Diaminodiphenylmethan, 2,2'-Diaminodiphenylmethan, 2,4'-Diaminodiphenylmethan oder Anilin, ein aliphatisches Polyamin, beispielsweise ein lineares aliphatisches Polyamin wie z.B. Hexamethylendiamin und Triethylentetramin, oder ein cyclisches aliphatisches Polyamin wie Isophorondiamin umfassen.

Das in Schritt a) bereitgestellte Kunststoffsolvolysegemisch umfasst mindestens ein Lösungsmittel. Das Lösungsmittel, welches bei einer Solvolyse von Kunststoff insbesondere als Solvolyse-Spaltreagenz dienen kann, ist bevorzugt ausgewählt aus Alkoholen, Glykolen, Aminen oder Mischungen davon. Geeignete Solvolyse-Spaltreagenzien sind dem Fachmann bekannt.

In einer Ausführungsform, insbesondere bei der Aminolyse, umfasst das Lösungsmittel mindestens ein Amin ausgewählt aus Methylamin, Ethylamin, Ethanolamin oder Mischungen davon.

In einer bevorzugten Ausführungsform, insbesondere bei der Alkoholyse oder Glykolyse, ist das Lösungsmittel ausgewählt aus Monoalkoholen, Dialkoholen, Glykolen oder Mischungen davon. Monoalkohole sind Alkohole mit einer Hydroxygruppe. Geeignete Monoalkohole sind insbesondere Methanol, Ethanol, Propanol oder Mischungen davon. Dialkohole (d.h. Diole) sind Alkohole mit zwei Hydroxygruppen. Ein geeignetes Dialkohol ist insbesondere Butandiol. Geeignete Glykole sind insbesondere Ethylenglykol, Diethylenglykol, Propylenglykol, Dipropylenglykol oder Mischungen davon, bevorzugt Diethylenglykol.

In einer Ausführungsform weist das Lösungsmittel ein Molekulargewicht von 30-500 g/mol, bevorzugt 30-250 g/mol auf.

Der Gehalt an Lösungsmittel in dem bereitgestellten Kunststoffsolvolysegemisch kann beispielsweise mehr als 40 Gew,%, bevorzugt 50-95 Gew.%, beispielsweise 70-90 Gew.%, insbesondere bei einem Alkoholysegemisch, oder 40-60 Gew.%, insbesondere bei einem Glykolysegemisch, bezogen auf das Gesamtgewicht des Gemischs betragen.

Das in Schritt a) bereitgestellte Kunststoffsolvolysegemisch umfasst mindestens einen Katalysator. Geeignete Solvolyse-Katalysatoren sind dem Fachmann bekannt. In einer Ausführungsform ist der Katalysator ein Alkoholat, bevorzugt ein Methanolat, Ethanolat oder Butanolat oder eine Mischung davon. Bevorzugt ist der Katalysator ein Alkalimetallmethanolat und besonders bevorzugt Kaliummethanolat oder Natriummethanolat. Ein Alkoholatkatalysator wie Kaliummethanolat oder Natriummethanolat liegt insbesondere vor, wenn das Lösungsmittel (d.h. das Solvolyse-Spaltreagenz) ein Alkohol, wie Methanol, Ethanol, Propanol oder eine Mischung davon, ist.

In einer Ausführungsform ist der Katalysator ein Metallkatalysator wie Titantetrabutanolat, Tetrabutyltitanat, Zink-, Magnesium- oder Cobaltacetat oder eine Mischung davon. Ein Metallkatalysator wie Tetrabutyltitanat liegt insbesondere vor, wenn das Lösungsmittel (d.h. das Solvolyse-Spaltreagenz) ein Glykol, wie Diethylenglykol, ist.

Der Gehalt an Katalysator in dem bereitgestellten Kunststoffsolvolysegemisch kann beispielsweise mehr als 0 und bis zu 10 Gew.%, bevorzugt 0,1-5 Gew.%, insbesondere 0,5-3 Gew.%, bezogen auf das Gesamtgewicht des Gemischs betragen.

Das Molekulargewicht des Katalysators kann 30-500 g/mol, bevorzugt 50-350 g/mol betragen.

In Schritt b) wird eine Membranfiltration des in Schritt a) bereitgestellten Kunststoffsolvolysegemischs bei einer Temperatur von 5-300°C, bevorzugt 50-200°C, und einem Druck von 2-150 bar, bevorzugt 5-100 bar, durchgeführt, um einen Filtrationsrückstand A und ein Filtrat B zu gewinnen.

Die im Schritt b) eingesetzte Membran für die Membranfiltration kann beispielsweise eine keramische Membran oder eine Polymermembran sein. Geeignete keramische Membranen umfassen beispielsweise Aluminiumoxid, Titandioxid, Siliziumdioxid, Zirconiumdioxid, Siliziumcarbid oder Mischunge davon. Geeignete Polymermembranen umfassen beispielsweise Polysulfone, Polyethersulfone, Cellulose, Celluloseester (wie Celluloseacetat oder Cellulosenitrat), regenerierte Cellulose, Silikone, Polyamide, Polyamidimid, Polycarbonate, Polyacrylnitril, Polyethylen, Polypropylen, Polytetrafluorethylen, Polyvinylidenfluorid, Polyvinylchlorid, Polypiperazinamid. Polyetherimid oder Mischungen davon.

Bevorzugt weist die Membran in Schritt b) eine Trenngrenze (MWCO) von 10-6000 Da, bevorzugt 100-6000 Da auf. Die Flussrate der Membranfiltration in Schritt b) kann bis zu 300 g/m$^2$ Membranfläche/h, beispielsweise 10-100 g/m$^2$ Membranfläche/h betragen.

Die Membranfiltration in Schritt b) wird bei einer Temperatur von 5-300°C, bevorzugt 50-200°C durchgeführt. Beispielsweise kann die Temperatur 50-100°C oder 100-200°C betragen. In einer Ausführungsform ist die Membran in Schritt b) eine keramische Membran und die Temperatur in diesem Schritt beträgt 5-300°C, bevorzugt 50-300°C, stärker bevorzugt 100-200°C. In einer Ausführungsform ist die Membran in Schritt b) eine Polymermembran und die Temperatur in diesem Schritt beträgt 5-300°C, bevorzugt 5-100°C, insbesondere 50-100°C.

Die Membranfiltration in Schritt b) wird bei einem Druck von 2-150 bar, bevorzugt 5-100 bar durchgeführt. Beispielsweise kann der Druck 5-40 bar betragen. In einer Ausführungsform ist die Membran in Schritt b) eine keramische Membran und der Druck in diesem Schritt beträgt 2-60 bar, bevorzugt 5-40 bar. In einer Ausführungsform ist die Membran in Schritt b) eine Polymermembran und der Druck in diesem Schritt beträgt 2-150 bar, bevorzugt 5-100 bar.

In einer Ausführungsform ist die Membranfiltration in Schritt b) eine Diafiltration. Bei einer Diafiltration wird die von der Membran zurückgehaltene Fraktion mit weiterem Lösungsmittel versetzt und erneut der Membranfiltration ausgesetzt wird. Dabei ist das zugegebenen Lösungsmittel wie hierin definiert und entspricht bevorzugt dem im Kunststoffsolvolysegemisch vorliegenden Lösungsmittel. Die Zugabe an Lösungsmittel kann dabei in einer Volumenmenge entsprechend der 0,5-10-fachen Volumenmenge der zurückgehaltenen Faktion erfolgen. Durch Diafiltration in Schritt b) kann beispielsweise der Gehalt an Katalysator im Filtrat B weiter erhöht werden.

Durch die Membranfiltration in Schritt b) wird ein Filtrationsrückstand A und ein Filtrat B gewonnen. Das Gewichtsverhältnis Katalysator: Kunststoffabbauprodukt in dem in Schritt b) gewonnenen Filtrat B ist höher als in dem in Schritt a) bereitgestellten Kunststoffsolvolysegemisch. Insbesondere weist das in Schritt b) gewonnene Filtrat B einen relativen Anteil an Katalysator in Bezug auf den Gehalt an Katalysator in dem in Schritt a) bereitgestellten Kunststoffsolvolysegemisch (entspricht 100 %) berechnet durch die Formel

(Menge an Katalysator in B [g] / Menge an Katalysator im Kunststoffsolvolysegemisch [g])

x 100 %

von 80% oder mehr, bevorzugt 85% oder mehr auf.

Das in Schritt b) gewonnene Filtrat B kann einen Gehalt an Katalysator und ggf. Lösungsmittel von 90 Gew.% oder mehr, bevorzugt 95 Gew.% oder mehr, insbesondere 98 Gew.% oder mehr bezogen auf das Gesamtgewicht des Filtrats B, auf.

Das Filtrat B ist bevorzugt ein Gemisch aus Lösungsmittel und Katalysator. Weitere Verbindungen wie Kunststoffabbauprodukte liegen im Filtrat B bevorzugt nur als Verunreinigungen vor, d.h. in einer Menge von nicht mehr als 10 Gew.%, bevorzugt nicht mehr als 5 Gew.%, insbesondere nicht mehr als 1,0 Gew.%, bezogen auf das Gesamtgewicht des Filtrats B. Insbesondere ist das Filtrat B geeignet als Solvolysereagenz umfassend Katalysator und Lösungsmittel (Solvolyse-Spaltreagenz) in einer Kunststoffsolvolysereaktion wieder verwendet zu werden.

Es wurde überraschend gefunden, dass das erfindungsgemäße Verfahren eine einfache und effektive Abtrennung von Lösungsmittel (Spaltreagenz) und Katalysator ermöglicht. Da der abgetrennte Katalysator weiterhin aktiv ist und nicht, wie im Stand der Technik üblich, zur Abtrennung deaktiviert (z.B. hydrolysiert) wird, können die Reagenzien recycelt und insbesondere einer erneuten Kunststoffsolvolysereaktion zugeführt werden. Neben erhöhter Wirtschaftlichkeit des Verfahrens ermöglicht dies, Spaltreagenzien und Katalysator im Überschuss bei der Kunststoffsolvolyse einzusetzen und somit die Solvolyse-Reaktion quantitativer und deutlich schneller auch bei niedrigeren Temperaturen ablaufen zu lassen.

Die Solvolysereagenzien können durch das erfindungsgemäße Verfahren im Vergleich zu üblichen Aufreinigungsverfahren wie Destillation mit verringertem Aufwand abgetrennt werden. Insbesondere vorteilhaft ist, dass die bei der Solvolyse eingesetzten Katalysatoren wie beispielsweise Alkalimetallalkoholate, (Alkali-)Metallacetate, und Titanate ohne deren vorherige Zersetzung und in hohen Konzentrationen abgetrennt werden können. Somit können sie recycelt und beispielsweise wieder einem Kunststoffsolvolyseprozess zugeführt werden. Dies ermöglicht beispielsweise den Kunststoffsolvolyseprozess als kontinuierliches Verfahren mit nachgeschalteter Aufreinigung und Katalysator/Lösungsmittel-Rückgewinnung zu etablieren.

Der im Schritt b) gewonnene Filtrationsrückstand A weist ein Gewichtsverhältnis von Kunststoffabbauprodukt : Katalysator auf, das bevorzugt höher ist als das in dem in Schritt a) bereitgestellten Kunststoffsolvolysegemisch. Insbesondere weist der in Schritt b) gewonnene Filtrationsrückstand A einen relativen Anteil an Kunststoffabbauprodukt in Bezug auf den Gehalt an Kunststoffabbauprodukt in dem in Schritt a) bereitgestellten Kunststoffsolvolysegemisch (entspricht 100 %) berechnet durch die Formel

(Menge an Kunststoffabbauprodukt in A [g] / Menge an Kunststoffabbauprodukt im

Kunststoffsolvolysegemisch [g]) x 100 %

von 150% oder mehr, bevorzugt 200% oder mehr und insbesondere 240% oder mehr auf.

Der Filtrationsrückstand A umfasst bevorzugt Kunststoffabbauprodukt, beispielsweise ein Gemisch aus mindestens einem Polyol und mindestens einem Polyamin. Weitere Verbindungen wie Katalysator und/oder Lösungsmittel liegen im Filtrationsrückstand A bevorzugt nur als Verunreinigungen vor, d.h. in einer Menge von nicht mehr als 1,0 Gew.%, bevorzugt nicht mehr als 0,50 Gew.%, bezogen auf das Gesamtgewicht des Filtrationsrückstands A. In einer bevorzugten Ausführungsform ist der Filtrationsrückstand A im Wesentlichen frei von Katalysator. Im Wesentlichen frei von Katalysator bedeutet, dass der Gehalt an Katalysator in dem in Schritt b) gewonnenen Filtrationsrückstand A 0,10 Gew.% oder weniger, bevorzugt 0,010 Gew.% oder weniger, besonders bevorzugt 0,0050 Gew.% oder weniger bezogen auf das Gesamtgewicht des Filtrationsrückstands A, beträgt.

Der Filtrationsrückstand A kann ferner einer Destillation unterzogen werden. Geeignete Destillationsbedingungen sind insbesondere Temperaturen von 20-300°C und Drücke von 0,0001-1 bar. Dies kann insbesondere zur Auftrennung oder Aufreinigung des Filtrationsrückstands A dienen.

Eine Auftrennung/Aufreinigung des Filtrationsrückstands A kann auch durch Membranfiltration erfolgen. Das erfindungsgemäße Verfahren kann ferner den Schritt umfassen:

c) Durchführen einer Membranfiltration des in Schritt b) gewonnenen Filtrationsrückstands A bei einer Temperatur von 5-300°C, bevorzugt 50-200°C und einem Druck von 2-150 bar, bevorzugt 5-100 bar um einen Filtrationsrückstand C und ein Filtrat D zu gewinnen.

Die im Schritt c) eingesetzte Membran für die Membranfiltration kann beispielsweise eine keramische Membran oder eine Polymermembran, wie hierin definiert, sein. Bevorzugt weist die Membran in Schritt c) eine Trenngrenze (MWCO) von 10-6000 Da, bevorzugt 100-3000 Da oder 3000-6000 bar auf. Die Flussrate der Membranfiltration in Schritt c) kann bis zu 300 g/m² Membranfläche/h, beispielsweise 10-100 g/m² Membranfläche/h betragen.

Die Membranfiltration in Schritt c) wird bei einer Temperatur von 5-300°C, bevorzugt 50-200°C durchgeführt. Beispielsweise kann die Temperatur 50-100°C oder 100-200°C betragen. In einer Ausführungsform ist die Membran in Schritte) eine keramische Membran und die Temperatur in diesem Schritt beträgt 5-300°C, bevorzugt 50-300°C, stärker bevorzugt 100-200°C. In einer Ausführungsform ist die Membran in Schritt c) eine Polymermembran und die Temperatur in diesem Schritt beträgt 5-300°C, bevorzugt 5-100°C, insbesondere 50-100°C.

Die Membranfiltration in Schritt c) wird bei einem Druck von 2-150 bar, bevorzugt 5-100 bar durchgeführt. Beispielsweise kann der Druck 5-40 bar betragen. In einer Ausführungsform ist die Membran in Schritt c) eine keramische Membran und der Druck in diesem Schritt beträgt 2-60 bar und bevorzugt 5-40 bar. In einer Ausführungsform ist die Membran in Schritt c) eine Polymermembran und der Druck in diesem Schritt beträgt 2-150 bar, bevorzugt 5-100 bar.

In einer Ausführungsform ist die Membranfiltration in Schritt c) eine Diafiltration. Bei einer Diafiltration wird die von der Membran zurückgehaltene Fraktion mit weiterem Lösungsmittel versetzt und erneut der Membranfiltration ausgesetzt. Dabei ist das zugegebenen Lösungsmittel wie hierin definiert und entspricht bevorzugt dem im Kunststoffsolvolysegemisch vorliegenden Lösungsmittel. Die Zugabe an Lösungsmittel kann dabei in einer Menge wie hierin beschrieben erfolgen. Durch Diafiltration in Schritt c) kann beispielsweise der Gehalt eines Kunststoffabbauprodukts im Filtrat D weiter erhöht werden.

Durch die Membranfiltration in Schritt c) wird ein Filtrationsrückstand C und ein Filtrat D gewonnen. In einer Ausführungsform umfasst der Filtrationsrückstand C mindestens ein Polyol-Kunststoffabbauprodukt und das Filtrat D mindestens ein Polyamin-Kunststoffabbauprodukt wie hierin definiert. In einer andern Ausführungsform umfasst der Filtrationsrückstand C mindestens ein Polyamin-Kunststoffabbauprodukt und das Filtrat D mindestens ein Polyol-Kunststoffabbauprodukt wie hierin definiert. Die Polyol-Fraktion C bzw. D kann einen Polyolgehalt von mindestens 80 Gew.%, insbesondere mindestens 85 Gew.%, bevorzugt mindestens 90 Gew.%, bezogen auf das Gesamtgewicht des Filtrationsrückstandes C bzw. des Filtrats D umfassen. Die Polyamin-Fraktion D bzw. C kann einen Polyamingehalt von mindestens 80 Gew.%, insbesondere mindestens 85 Gew.%, bevorzugt mindestens 90 Gew.%, bezogen auf das Gesamtgewicht des Filtrats D bzw. des Filtrationsrückstandes C umfassen.

Ferner kann der Filtrationsrückstand C und/oder das Filtrat D Lösungsmittel umfassen.

In einer Ausführungsform wird der Filtrationsrückstand C einer Destillation unterzogen. Geeignete Destillationsbedingungen sind insbesondere Temperaturen von 20-300°C und Drücke von 0,0001-1 bar. Dies kann insbesondere zur Auftrennung oder Aufreinigung des Filtrationsrückstands C, beispielsweise zur Abtrennung von Lösungsmittel, dienen. Eine Auftrennung/Aufreinigung des Filtrationsrückstands C kann auch durch Membranfiltration erfolgen.

In einer Ausführungsform wird das Filtrat D einer Destillation unterzogen. Geeignete Destillationsbedingungen sind insbesondere Temperaturen von 20-300°C und Drücke von 0,0001-1 bar. Dies kann insbesondere zur Auftrennung oder Aufreinigung des Filtrats D, beispielsweise zur Abtrennung von Lösungsmittel, dienen. Eine Auftrennung/Aufreinigung des Filtrats D kann auch durch Membranfiltration erfolgen.

In einer Ausführungsform umfasst das erfindungsgemäße Verfahren ferner mindestens einen weiteren Membranfiltrationsschritt:

dn) Durchführen einer Membranfiltration des im vorhergehenden Schritt gewonnenen Filtrationsrückstands oder des im vorhergehenden Schritt gewonnenen Filtrats bei einer Temperatur von 5-300°C, bevorzugt 50-200°C und einem Druck von 2-150 bar, bevorzugt 5-100 bar um einen Filtrationsrückstand En und ein Filtrat Fn zu gewinnen.

Das Verfahren kann einen oder mehrere Membranfiltrationsschritte dn) umfassen. Beispielsweise umfasst das erfindungsgemäße Verfahren einen Membranfiltrationsschritt d1), zwei Membranfiltrationsschritte d1) und d2) oder drei Membranfiltrationsschritte d1), d2) und d3). Im Membranfiltrationsschritt d1) kann der Filtrationsrückstand C und/oder das Filtrat D einer Membranfiltration ausgesetzt werden. Im Schritt d2) kann der Filtrationsrückstand E1 aus dem Schritt d1) und/oder das Filtrat F1 aus dem Schritt d1) einer Membranfiltration ausgesetzt werden usw.

In einer bevorzugten Ausführungsform umfasst das erfindungsgemäße Verfahren
c) Durchführen einer Membranfiltration des in Schritt b) gewonnenen Filtrationsrückstands A bei einer Temperatur von 5-300°C, bevorzugt 50-200°C und einem Druck von 2-150 bar, bevorzugt 5-100 bar um einen Filtrationsrückstand C und ein Filtrat D zu gewinnen; und einen weiteren Membranfiltrationsschritt

d1) Durchführen einer Membranfiltration des im vorherigen Schritt gewonnenen Filtrationsrückstands C bei einer Temperatur von 5-300°C, bevorzugt 50-200°C und einem Druck von 2-150 bar, bevorzugt 5-100 bar um einen Filtrationsrückstand E1 und ein Filtrat F1 zu gewinnen
oder
Durchführen einer Membranfiltration des im vorherigen Schritt gewonnenen Filtrats D bei einer Temperatur von 5-300°C, bevorzugt 50-200°C und einem Druck von 2-150 bar, bevorzugt 5-100 bar um einen Filtrationsrückstand E1 und ein Filtrat F1 zu gewinnen.

Die im Schritt dn) eingesetzte Membran für die Membranfiltration kann unabhängig ausgewählt sein aus einer keramischen Membran und einer Polymermembran, wie hierin definiert. Bevorzugt weist die Membran in mindestens einem Schritt dn) eine Trenngrenze (MWCO) von 10-6000 Da, bevorzugt 100-3000 Da oder 3000-6000 Da auf. Die Flussrate der Membranfiltration in mindestens einem Schritt dn) kann bis zu 300 $g/m^2$ Membranfläche/h, beispielsweise 10-100 $g/m^2$ Membranfläche/h betragen.

In einer Ausführungsform ist die Trenngrenze (MWCO) der Membran in Schritt c) bevorzugt 100-3000 Da und die Trenngrenze (MWCO) der Membran in mindestens einem Schritt dn), insbesondere in Schritt d1), 3000-6000 Da.

In einer Ausführungsform ist die Trenngrenze (MWCO) der Membran in Schritt c) bevorzugt 3000-6000 Da und die Trenngrenze (MWCO) der Membran in mindestens einem Schritt dn), insbesondere in Schritt d1), 100-3000 Da

Die Membranfiltration in mindestens einem Schritt dn), insbesondere d1), wird bei einer Temperatur von 5-300°C, bevorzugt 50-200°C durchgeführt. Beispielsweise kann die Temperatur 50-100°C oder 100-200°C betragen. In einer Ausführungsform ist die Membran in mindestens einem Schritt dn), insbesondere d1), eine keramische Membran und die Temperatur in diesem Schritt beträgt 5-300°C, bevorzugt 50-300°C, stärker bevorzugt 100-200°C. In einer Ausführungsform ist die Membran in mindestens einem Schritt dn), insbesondere d1), eine Polymermembran und die Temperatur in diesem Schritt beträgt 5-300°C, bevorzugt 5-100°C, insbesondere 50-100°C.

Die Membranfiltration in mindestens einem Schritt dn), insbesondere d1), wird bei einem Druck von 2-150 bar, bevorzugt 5-100 bar durchgeführt. Beispielsweise kann der Druck 5-40 bar betragen. In einer Ausführungsform ist die Membran in mindestens einem Schritt dn), insbesondere d1), eine keramische Membran und der Druck in diesem Schritt beträgt 2-60 bar, bevorzugt 5-40 bar. In einer Ausführungsform ist die Membran in mindestens einem Schritt dn), insbesondere d1), eine Polymermembran und der Druck in diesem Schritt beträgt 2-150 bar, bevorzugt 5-100 bar.

In einer Ausführungsform ist die Membranfiltration in mindestens einem Schritt dn), bevorzugt in allen Schritten dn), eine Diafiltration. Bei einer Diafiltration wird die von der Membran zurückgehaltene Fraktion mit weiterem Lösungsmittel versetzt und erneut der Membranfiltration ausgesetzt wird. Dabei ist das zugegebenen Lösungsmittel wie hierin definiert und entspricht bevorzugt dem im Kunststoffsolvolysegemisch vorliegenden Lösungsmittel. Die Zugabe an Lösungsmittel kann dabei in einer Menge wie hierin beschrieben erfolgen. Durch Diafiltration in einem Schritt dn) kann beispielsweise der Gehalt eines Kunststoffabbauprodukts im Filtrat Fn weiter erhöht werden.

In einer Ausführungsform ist sowohl die Membranfiltration in Schritt c) als auch die Membranfiltration in mindestens einem Schritt dn), insbesondere in Schritt d1), eine Dialfiltration. Ein solches Verfahren kann umfassen, dass die von der Membran zurückgehaltene Fraktion in Schritt c) und die von der Membran zurückgehaltene Fraktion in mindestens einem Schritt dn), insbesondere d1), gemischt und mit weiterem Lösungsmittel versetzt werden. Die so erhaltene Mischung wird erneut der Membranfiltration in den Schritten c) und dn) ausgesetzt.

Durch eine Membranfiltration in Schritt dn) wird ein Filtrationsrückstand En und ein Filtrat Fn gewonnen. In einer Ausführungsform umfasst ein Filtrationsrückstand En, wie ein Filtrationsrückstand E1, mindestens ein Polyol-Kunststoffabbauprodukt und ein Filtrat Fn, wie ein Filtrat F1, mindestens ein Polyamin-Kunststoffabbauprodukt wie hierin definiert. In einer andern Ausführungsform umfasst ein Filtrationsrückstand En, wie ein Filtrationsrückstand E1, mindestens ein Polyamin-Kunststoffabbauprodukt und ein Filtrat Fn, wie ein Filtrat F1, mindestens ein Polyol-Kunststoffabbauprodukt wie hierin definiert. Eine Polyol-Fraktion En bzw. Fn kann einen Polyolgehalt von mindestens 80 Gew.%, insbesondere mindestens 85 Gew.%, bevorzugt mindestens 90 Gew.%, bezogen auf das Gesamtgewicht des Filtrationsrückstandes En bzw. des Filtrats Fn umfassen. Eine Polyamin-Fraktion Fn bzw. En kann einen Polyamingehalt von mindestens 80 Gew.%, insbesondere mindestens 85 Gew.%, bevorzugt mindestens 90 Gew.%, bezogen auf das Gesamtgewicht des Filtrats Fn bzw. des Filtrationsrückstandes En umfassen.

Eine Polyol-Fraktion En bzw. Fn aus Schritt dn) unterscheidet sich insbesondere von einer Polyol-Fraktion C bzw. D aus Schritt b) durch ihr Molekulargewicht. In einer Ausführungsform weist eine Polyol-Fraktion C bzw. D aus Schritt b) ein höheres Molekulargewicht auf als eine Polyol-Fraktion En bzw. Fn aus Schritt dn). In einer anderen Ausführungsform weist eine Polyol-Fraktion C bzw. D aus Schritt b) ein niedrigeres Molekulargewicht auf als eine Polyol-Fraktion En bzw. Fn aus Schritt dn).

Ein Filtrationsrückstand En und/oder ein Filtrat Fn kann ferner Lösungsmittel umfassen.

In einer Ausführungsform wird ein Filtrationsrückstand En einer Destillation unterzogen. Geeignete Destillationsbedingungen sind insbesondere Temperaturen von 20-300°C und Drücke von 0,0001-1 bar. Dies kann insbesondere zur Auftrennung oder Aufreinigung des Filtrationsrückstands En, beispielsweise zur Abtrennung von Lösungsmittel, dienen. Eine Auftrennung/Aufreinigung des Filtrationsrückstands En kann auch durch Membranfiltration in einem nachfolgenden Schritt dn+1) erfolgen.

In einer Ausführungsform wird ein Filtrat Fn einer Destillation unterzogen. Geeignete Destillationsbedingungen sind insbesondere Temperaturen von 20-300°C und Drücke von 0,0001-1 bar. Dies kann insbesondere zur Auftrennung oder Aufreinigung des Filtrats Fn, beispielsweise zur Abtrennung von Lösungsmittel, dienen. Eine Auftrennung/Aufreinigung des Filtrats Fn kann auch durch Membranfiltration in einem nachfolgenden Schritt dn+1) erfolgen.

Ein weiterer Aspekt der vorliegenden Erfindung betrifft ein Verfahren zur Auftrennung eines Kunststoffsolvolysegemischs umfassend die folgenden Schritte:

a) Bereitstellen eines flüssigen Kunststoffsolvolysegemischs umfassend Kunststoffabbauprodukt, Lösungsmittel und ggf. Katalysator

b) Durchführen einer Membranfiltration des in Schritt a) bereitgestellten Kunststoffsolvolysegemischs bei einer Temperatur von 5-300°C, bevorzugt 50-200°C und einem Druck von 2-150 bar, bevorzugt 5-100 bar um einen Filtrationsrückstand A und ein Filtrat B zu gewinnen,

c) ggf. Durchführen einer Membranfiltration des in Schritt b) gewonnenen Filtrationsrückstands A bei einer Temperatur von 5-300°C, bevorzugt 50-200°C und einem Druck von 2-150 bar, bevorzugt 5-100 bar um einen Filtrationsrückstand C und ein Filtrat D zu gewinnen

und gegebenenfalls mindestens einen weiteren Membranfiltrationsschritt

dn) Durchführen einer Membranfiltration des im vorhergehenden Schritt gewonnenen Filtrationsrückstands oder des im vorhergehenden Schritt gewonnenen Filtrats bei einer Temperatur von 5-300°C, bevorzugt 50-200°C und einem Druck von 2-150 bar, bevorzugt 5-100 bar um einen Filtrationsrückstand En und ein Filtrat Fn zu gewinnen, wobei das Gewichtsverhältnis Lösungsmittel : Kunststoffabbauprodukt in dem in Schritt b) gewonnenen Filtrat B höher ist als in dem in Schritt a) bereitgestellten Kunststoffsolvolysegemisch.

Geeignete Ausführungsformen dieses Verfahrens sind wie hierin für den ersten Aspekt der Erfindung definiert.

Es wurde überraschend gefunden, dass das erfindungsgemäße Verfahren eine deutlich verbesserte Auftrennung von Kunststoffsolvolysegemischen möglich ist. Die dadurch erhaltenen Kunststoffabbauproduktfraktionen weisen eine höhere Reinheit als konventionell erhaltene Kunststoffabbauproduktfraktionen auf und können somit in größerem Umfang als Rohstoff, beispielsweise zur Herstellung von Kunststoffen, eingesetzt werden. Ferner können Lösungsmittel und ggf. Katalysator mit verringertem Aufwand abgetrennt und zudem wieder dem Kunststoffabbauprozess zugeführt werden.

Somit erlaubt das erfindungsgemäße Verfahren eine einfache, effektive Abtrennung von Spaltreagenzien und ggf. des weiterhin aktiven Katalysators. Neben erhöhter Wirtschaftlichkeit des Verfahrens ermöglicht dies, Spaltreagenzien und ggf. Katalysator im Überschuss bei der Kunststoffsolvolyse einzusetzen und somit die Solvolyse-Reaktion quantitativer und deutlich schneller auch bei niedrigeren Temperaturen ablaufen zu lassen.

Ein weiterer Aspekt der vorliegenden Erfindung betrifft ein Kunststoffabbauprodukt erhältlich durch ein erfindungsgemäßes Verfahren. Bevorzugt ist das Kunststoffabbauprodukt bei Raumtemperatur (20°C) flüssig und liegt insbesondere in Form eines homogenen, flüssigen Gemischs oder in reiner Form vor. Die Viskosität des Kunststoffabbauprodukts beträgt insbesondere 10-100.000 mPa s, gemessen bei 20°C.

Das Kunststoffabbauprodukt kann aus Polyaminen, Polyolen, Carbamaten, Polycarbonsäuren, Polycarbonsäureestern, Hydroxy-Carbonsäuren, Hydroxy-Carbonsäureestern oder Mischungen davon ausgewählt sein. Vorzugsweise ist das Kunststoffabbauprodukt ausgewählt aus Polyaminen, Polyolen, Carbamaten, Polycarbonsäuren und/oder Polycarbonsäureestern. In einer besonders bevorzugten Ausführungsform umfasst das Kunststoffabbauprodukt mindestens ein Polyol, mindestens ein Polyamin oder eine Mischung davon.

Im Gegensatz zu mittels üblichen Verfahren erhältlichen Kunststoffabbauprodukten, weisen die mittels des erfindungsgemäßen Verfahrens erhältlichen Kunststoffabbauprodukte eine höhere Reinheit auf und können somit in größerem Umfang als Rohstoff, beispielsweise zur Herstellung von Kunststoffen, eingesetzt werden. Insbesondere weisen die mittels des erfindungsgemäßen Verfahrens erhältlichen Kunststoffabbauprodukte einen geringeren Gehalt an Solvolysekatalysator und/oder Solvolysespaltreagenz auf.

Bevorzugt beträgt der Gehalt an Katalysator in dem erfindungsgemäßen Kunststoffabbauprodukt nicht mehr als 5 Gew.% und insbesondere nicht mehr als 1,0 Gew.%, bevorzugt nicht mehr als 0,50 Gew.%, besonders bevorzugt nicht mehr als 0,010 Gew.%.

Bevorzugt beträgt der Gehalt an Lösungsmittel in dem erfindungsgemäßen Kunststoffabbauprodukt nicht mehr als 5 Gew.% und insbesondere nicht mehr als 1,0 Gew.%.

Ein weiterer Aspekt der vorliegenden Erfindung betrifft eine Verwendung des erfindungsgemäßen Kunststoffabbauprodukts zur Herstellung von Kunststoffen, insbesondere von Polyurethanen.

Ein weiterer Aspekt der vorliegenden Erfindung betrifft eine Verwendung des in Schritt b) gewonnen Filtrats für eine Solvolyse von Kunststoffen.

Weiterhin soll die vorliegende Erfindung durch die nachfolgenden Beispiele erläutert werden.

Beispiel 1 - Glykolyse

Ein beispielhaftes Gemisch aus Etherpolyol (Lupranol 2095, 49,45%), niedermolekularem Dipropylenglykol (49,45%) und 0,1% Tetrabutyltitanat, wie es bei einer Glykolyse von Polyurethan-Weichschäumen typischerweise anfallen kann, wurde bei 57 bar und 60°C mittels einer PURA-Membran (PuraMemFlux) filtriert. Das Filtrat enthielt 91,2% an Dipropylenglykol und Tetrabutyltitanat und konnte direkt wieder als Spaltreagenz für die Glykolyse von Kunststoffen eingesetzt werden. Der Filtrationsrückstand wies einen Polyolanteil von > 90% auf und wurde ohne weitere Trenn-/Reinigungsschritte als Edukt bei der Polyurethan-Herstellung eingesetzt.

Der Titan-Gehalt (Katalysator) im Ausgangsgemisch und im Filtrat wurde mittels ICP-OES Messungen detektiert. Es wurden Titan-Gehalte (Katalysator) von 244,2 mg/kg Titan im Ausgangsgemisch und 215,4 mg/kg Titan im Filtrat gemessen. Dies zeigt, dass der Katalysator effektiv die Membran passieren konnte. Somit ermöglicht das erfindungsgemäße Verfahren im Filtrat hohe Mengen des Katalysators wiederzugewinnen und das Filtrat mit Ti-Konzentrationen >88% direkt für die nächste Spaltreaktion wiederzuverwenden.

**Beispiel 2 - Methanolyse**

Polyurethan-Weichschaum-Abfälle (16%) wurden mit einem Überschuss an Methanol (74%) und 10% Natriummethylat bei 160°C und 16 bar depolymerisiert. Aufgrund des stark basischen Charakters des Katalysators wies die Mischung einen pH-Wert von 10,54 (25°C) auf. Das so erhaltende Gemisch aus Methanol, Etherpolyol, Toluylendiamin und Natriummethanolat wurde mittels Membranfiltration aufgearbeitet. In einem ersten Schritt wurde das Gemisch einer Membranfiltration an einer NADIR NP030 P - Membran auf Basis von Polyethersulfon bei einem Druck von 62 bar und einer Temperatur von 25°C ausgesetzt. Als Filtrat wurde ein Gemisch aus Methanol (98,96%) und Toluylendiamin (TDA) (1,04%) erhalten. Der Filterrückstand enthielt 38.55% Etherpolyol.

Durch weiteren Zusatz von frischem Methanol zum Filterrückstand und anschließender Membranfiltration wurde der polyolhaltige Filterrückstand mittels Diafiltration weiter aufgereinigt und im TDA-Gehalt reduziert (mehrstufige Membranfiltration).

Das im resultierenden Filterrückstand angereicherte Etherpolyol konnte nach Entfernung des restlichen Methanols (mittels Destillation) direkt als Polyol für die Kunststoffproduktion, z.B. bei der Polyurethan-Weichschaum-Herstellung, eingesetzt werden.

Das Filtrat aus Methanol und Toluylen-Diamin wurde durch eine weitere Membranfiltration (PURA-Membran) aufgereinigt. Das dabei resultierende Filtrat wies eine Methanol Konzentration von 99.95% und eine TDA-Konzentration von 0,05% bei einem ermittelten pH-Wert von 10,14 auf. Aufgrund der hohen Basizität (basischer Katalysator) konnte das Filtrat direkt wieder als Spaltreagenz ohne neuen Katalysatorzusatz eingesetzt werden.

Aus dem Filterrückstand (TDA-Fraktion) wurde mittels destillativer Abtrennung das Methanols entfernt. Das resultierende TDA wurde als Grundmonomer für Polymersynthesen bzw. nach Phosgenierung für die Isocyanatherstellung eingesetzt.

Die folgenden Punkte sind Gegenstand der Erfindung:

1. Verfahren zur Auftrennung eines Kunststoffsolvolysegemischs umfassend die folgenden Schritte:

a) Bereitstellen eines flüssigen Kunststoffsolvolysegemischs umfassend Kunststoffabbauprodukt, Lösungsmittel und Katalysator

b) Durchführen einer Membranfiltration des in Schritt a) bereitgestellten Kunststoffsolvolysegemischs bei einer Temperatur von 5-300°C, bevorzugt 50-200°C und einem Druck von 2-150 bar, bevorzugt 5-100 bar um einen Filtrationsrückstand A und ein Filtrat B zu gewinnen,

wobei das Gewichtsverhältnis Katalysator : Kunststoffabbauprodukt in dem in Schritt b) gewonnenen Filtrat B höher ist als in dem in Schritt a) bereitgestellten Kunststoffsolvolysegemisch.

2. Verfahren nach Punkt 1, ferner umfassend den Schritt
c) Durchführen einer Membranfiltration des in Schritt b) gewonnenen Filtrationsrückstands A bei einer Temperatur von 5-300°C, bevorzugt 50-200°C und einem Druck von 2-150 bar, bevorzugt 5-100 bar um einen Filtrationsrückstand C und ein Filtrat D zu gewinnen.

3. Verfahren nach Punkt 2, ferner umfassend mindestens einen weiteren Membranfiltrationsschritt
dn) Durchführen einer Membranfiltration des im vorhergehenden Schritt gewonnenen Filtrationsrückstands oder des im vorhergehenden Schritt gewonnenen Filtrats bei einer Temperatur von 5-300°C, bevorzugt 50-200°C und einem Druck von 2-150 bar, bevorzugt 5-100 bar um einen Filtrationsrückstand En und ein Filtrat Fn zu gewinnen.

4. Verfahren nach Punkt 2, umfassend einen weiteren Membranfiltrationsschritt
d1) Durchführen einer Membranfiltration des im vorherigen Schritt gewonnenen Filtrationsrückstands C oder Filtrats D bei einer Temperatur von 5-300°C, bevorzugt 50-200°C und einem Druck von 2-150 bar, bevorzugt 5-100 bar um einen Filtrationsrückstand E1 und ein Filtrat F1 zu gewinnen.

5. Verfahren nach einem der vorhergehenden Punkte, wobei das Kunststoffsolvolysegemisch in Form einer Lösung vorliegt.

6. Verfahren nach einem der vorhergehenden Punkte, wobei die Membranfiltration in Schritt b), c) und/oder dn) eine Diafiltration ist.

7. Verfahren nach einem der vorhergehenden Punkte, wobei die Flussrate Schritt b), c) und/oder dn) bis zu 300 $g/m^2$ Membranfläche/h, bevorzugt 10-100 $g/m^2$ Membranfläche/h Membranfläche beträgt.

8. Verfahren nach einem der vorhergehenden Punkte, wobei die Membran in Schritt b), c) und dn) eine keramische Membran oder eine Polymermembran ist.

9. Verfahren nach einem der vorhergehenden Punkte, wobei die Membran in Schritt b) eine Trenngrenze von 10-6000 Da, bevorzugt 100-3000 Da oder 3000-6000 Da aufweist.

10. Verfahren nach einem der vorhergehenden Punkte, wobei die Membran in Schritt c) eine Trenngrenze von 10-6000 Da, bevorzugt 100-3000 Da oder 3000-6000 Da aufweist.

11. Verfahren nach einem der vorhergehenden Punkte, wobei die Membran in Schritt dn) eine Trenngrenze von 10-6000 Da, bevorzugt 100-3000 Da oder 3000-6000 Da aufweist.

12. Verfahren nach einem der vorhergehenden Punkte, wobei die Membran in Schritt b), c) und dn) eine keramische Membran ist und der Druck in diesem Schritt 2-60 bar, bevorzugt 5-40 bar beträgt.

13. Verfahren nach einem der vorhergehenden Punkte, wobei die Membran in Schritt b), c) und dn) eine Polymermembran ist und die Temperatur in diesem Schritt 5-300°C, bevorzugt 5-100°C, insbesondere 50-100 °C beträgt.

14. Verfahren nach einem der vorhergehenden Punkte, wobei das Lösungsmittel ausgewählt ist aus Alkoholen, Glykolen, Aminen oder Mischungen davon.

15. Verfahren nach einem der vorhergehenden Punkte, wobei das Lösungsmittel ausgewählt ist aus

Monoalkoholen, insbesondere Methanol, Ethanol, Propanol und Mischungen davon, Diolen, insbesondere Butandiol,
Glykolen, insbesondere Diethylenglykol, Ethylenglykol, Diethylenglykol, Propylenglykol, und/oder Dipropylenglykol, oder
Mischungen davon.

16. Verfahren nach einem der vorhergehenden Punkte, wobei das Lösungsmittel ein Molekulargewicht von 30-500 g/mol, bevorzugt 30-250 g/mol aufweist.

17. Verfahren nach einem der vorhergehenden Punkte, wobei der Katalysator ein Molekulargewicht von 30-500 g/mol, bevorzugt 50-350 g/mol aufweist.

18. Verfahren nach einem der vorhergehenden Punkte, wobei der Katalysator ein Alkoholat ist, bevorzugt ein Methanolat, Ethanolat oder Butanolat.

19. Verfahren nach einem der vorhergehenden Punkte, wobei der Katalysator ein Alkalimetallmethanolat, bevorzugt Kaliummethanolat oder Natriummethanolat ist.

20. Verfahren nach einem der vorhergehenden Punkte, wobei der Katalysator ein Metallkatalysator wie Titantetrabutanolat, Tetrabutyltitanat, Zink-, Magnesium- oder Cobaltacetat oder eine Mischung davon ist.

21. Verfahren nach einem der vorhergehenden Punkte, wobei das Kunststoffabbauprodukt durch Solvolyse von mindestens einem Polyurethan, Polyester, Polyetherester, Polyamid, Polycarbonat, Polyisocyanurat, Polylactid oder einer Mischung davon, bevorzugt von mindestens einem Polyurethan, erhalten ist.

22. Verfahren nach einem der vorhergehenden Punkte, wobei das Kunststoffabbauprodukt bei Raumtemperatur (20°C) flüssig ist und bevorzugt eine Viskosität von insbesondere 10-100.000 mPa s, gemessen bei 20°C aufweist.

23. Verfahren nach einem der vorhergehenden Punkte, wobei das Kunststoffabbauprodukt ausgewählt ist aus Polyaminen, Polyolen, Carbamaten, Polycarbonsäuren, Polycarbonsäureestern, Hydroxy-Carbonsäuren, Hydroxy-Carbonsäureestern oder Mischungen davon, vorzugsweise Polyaminen, Polyolen, Carbamaten, Polycarbonsäuren und/oder Polycarbonsäureestern.

24. Verfahren nach einem der vorhergehenden Punkte, wobei das Kunststoffabbauprodukt mindestens ein Polyol und mindestens ein Polyamin umfasst.

25. Verfahren nach einem der vorhergehenden Punkte, wobei das Kunststoffabbauprodukt ein gewichtsmittleres Molekulargewicht von 30-20.000 g/mol, bevorzugt 50-10.000 g/mol, insbesondere 100-5.000 g/mol aufweist.

26. Verfahren nach einem der vorhergehenden Punkte, ferner umfassend eine Destillation des in Schritt b), c) und/oder dn) gewonnenen Filtrationsrückstandes A, C und/oder En.

27. Verfahren nach einem der vorhergehenden Punkte, ferner umfassend eine Destillation des in Schritt b), c) und/oder dn) gewonnenen Filtrats B, D und/oder Fn.

28. Verfahren nach einem der vorhergehenden Punkte, wobei das Kunststoffsolvolysegemisch vor Schritt a) einer Fest/Flüssig-Filtration unterzogen wird.

29. Verfahren nach einem der vorhergehenden Punkte, wobei das Gewichtsverhältnis Kunststoffabbauprodukt : Katalysator im in Schritt b) gewonnenen Filtrationsrückstand A höher ist als in dem in Schritt a) bereitgestellten Kunststoffsolvolysegemisch.

30. Verfahren nach einem der vorhergehenden Punkte, wobei ein relativer Anteil an Katalysator im Filtrat B in Bezug auf den Gehalt an Katalysator in dem in Schritt a) bereitgestellten Kunststoffsolvolysegemisch (entspricht 100 %) 80 % oder mehr, bevorzugt 85 % oder mehr beträgt.

31. Kunststoffabbauprodukt erhältlich durch ein Verfahren nach einem der Punkte 1-30, wobei das Kunststoffabbauprodukt bevorzugt ausgewählt ist aus Polyaminen, Polyolen, Carbamaten, Polycarbonsäuren, Polycarbonsäureestern, Hydroxy-Carbonsäuren, Hydroxy-Carbonsäureestern oder Mischungen davon, insbesondere Polyaminen, Polyolen, Carbamaten, Polycarbonsäuren und/oder Polycarbonsäureestern.

32. Kunststoffabbauprodukt nach Punkt 31, wobei das Kunststoffabbauprodukt bei Raumtemperatur (20°C) flüssig ist und bevorzugt eine Viskosität von 10-100.000 mPa s, gemessen bei 20°C aufweist.

33. Kunststoffabbauprodukt nach Punkt 31 oder 32, wobei das Kunststoffabbauprodukt mindestens ein Polyol, mindestens ein Polyamin oder eine Mischung davon umfasst.

34. Verwendung des Kunststoffabbauprodukts nach einem der Punkte 31-33 zur Herstellung von Kunststoffen, insbesondere von Polyurethanen.

35. Verwendung des in Schritt b) nach einem der Punkte 1-30 gewonnen Filtrats für die Solvolyse von Kunststoffen.

**Patentansprüche**

1. Verfahren zur Auftrennung eines Kunststoffsolvolysegemischs umfassend die folgenden Schritte:

   a) Bereitstellen eines flüssigen Kunststoffsolvolysegemischs umfassend Kunststoffabbauprodukt, Lösungsmittel und Katalysator
   b) Durchführen einer Membranfiltration des in Schritt a) bereitgestellten Kunststoffsolvolysegemischs bei einer Temperatur von 5-300°C, bevorzugt 50-200°C und einem Druck von 2-150 bar, bevorzugt 5-100 bar um einen Filtrationsrückstand A und ein Filtrat B zu gewinnen,

   wobei das Gewichtsverhältnis Katalysator : Kunststoffabbauprodukt in dem in Schritt b) gewonnenen Filtrat B höher ist als in dem in Schritt a) bereitgestellten Kunststoffsolvolysegemisch.

2. Verfahren nach Anspruch 1, ferner umfassend den Schritt
   c) Durchführen einer Membranfiltration des in Schritt b) gewonnenen Filtrationsrückstands A bei einer Temperatur von 5-300°C, bevorzugt 50-200°C und einem Druck von 2-150 bar, bevorzugt 5-100 bar um einen Filtrationsrückstand C und ein Filtrat D zu gewinnen und gegebenenfalls mindestens einen weiteren Membranfiltrationsschritt
   dn) Durchführen einer Membranfiltration des im vorhergehenden Schritt gewonnenen Filtrationsrückstands oder des im vorhergehenden Schritt gewonnenen Filtrats bei einer Temperatur von 5-300°C, bevorzugt 50-200°C und einem Druck von 2-150 bar, bevorzugt 5-100 bar um einen Filtrationsrückstand En und ein Filtrat Fn zu gewinnen.

3. Verfahren nach einem der vorhergehenden Ansprüche, wobei das Kunststoffsolvolysegemisch in Form einer Lösung vorliegt.

4. Verfahren nach einem der vorhergehenden Ansprüche, wobei die Membran in Schritt b), c) und/oder dn) eine keramische Membran oder eine Polymermembran ist.

5. Verfahren nach einem der vorhergehenden Ansprüche, wobei die Membran in Schritt b), c) und/oder dn) eine Trenngrenze von 10-6000 Da, bevorzugt 100-3000 Da oder 3000-6000 Da aufweist.

6. Verfahren nach einem der vorhergehenden Ansprüche, wobei die Membranfiltration in Schritt b), c) und/oder dn) eine Diafiltration ist.

7. Verfahren nach einem der vorhergehenden Ansprüche, wobei das Lösungsmittel ausgewählt ist aus Alkoholen, Glykolen, Aminen oder Mischungen davon, bevorzugt Monoalkoholen, insbesondere Methanol, Ethanol, Propanol, oder Mischungen davon, Diolen, insbesondere Butandiol, Glykolen, insbesondere Diethylenglykol, Ethylenglykol, Diethylenglykol, Propylenglykol, und/oder Dipropylenglykol, oder Mischungen davon.

8. Verfahren nach einem der vorhergehenden Ansprüche, wobei der Katalysator ein Alkoholat, bevorzugt ein Methanolat, Ethanolat oder Butanolat, insbesondere Kaliummethanolat oder Natriummethanolat, oder ein Metallkatalysator wie Titantetrabutanolat, Tetrabutyltitanat, Zink-, Magnesium- oder Cobaltacetat oder eine Mischung davon ist.

9. Verfahren nach einem der vorhergehenden Ansprüche, wobei das Lösungsmittel ein Molekulargewicht von 30-500 g/mol, bevorzugt 30-250 g/mol aufweist und/oder wobei der Katalysator ein Molekulargewicht von 30-500 g/mol, bevorzugt 50-350 g/mol aufweist.

10. Verfahren nach einem der vorhergehenden Ansprüche, wobei das Kunststoffabbauprodukt durch Solvolyse von mindestens einem Polyurethan, Polyester, Polyetherester, Polyamid, Polycarbonat, Polyisocyanurat, Polylactid oder einer Mischung davon, bevorzugt von mindestens einem Polyurethan, erhalten ist.

11. Verfahren nach einem der vorhergehenden Ansprüche, wobei das Kunststoffabbauprodukt ausgewählt ist aus Polyaminen, Polyolen, Carbamaten, Polycarbonsäuren, Polycarbonsäureestern, Hydroxy-Carbonsäuren, Hydroxy-Carbonsäureestern oder Mischungen davon, vorzugsweise Polyaminen, Polyolen, Carbamaten, Polycarbonsäuren und/oder Polycarbonsäureestern.

12. Verfahren nach einem der vorhergehenden Ansprüche, wobei ein relativer Anteil an Katalysator im Filtrat B in Bezug auf den Gehalt an Katalysator in dem in Schritt a) bereitgestellten Kunststoffsolvolysegemisch (entspricht 100 %) 80% oder mehr, bevorzugt 85% oder mehr beträgt.

13. Kunststoffabbauprodukt erhältlich durch ein Verfahren nach einem der Ansprüche 1-12, wobei das Kunststoffabbauprodukt insbesondere ausgewählt ist aus Polyaminen, Polyolen, Carbamaten, Polycarbonsäuren, Polycarbonsäureestern, Hydroxy-Carbonsäuren, Hydroxy-Carbonsäureestern oder Mischungen davon, vorzugsweise Polyaminen, Polyolen, Carbamaten, Polycarbonsäuren und/oder Polycarbonsäureestern.

14. Verwendung des Kunststoffabbauprodukts nach Anspruch 13 zur Herstellung von Kunststoffen, insbesondere von Polyurethanen.

15. Verwendung des in Schritt b) nach einem der Ansprüche 1-12 gewonnen Filtrats für die Solvolyse von Kunststoffen.

Europäisches Patentamt
European Patent Office
Office européen des brevets

# EUROPÄISCHER RECHERCHENBERICHT

Nummer der Anmeldung

EP 22 18 3494

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2009/106605 A1 (BASF SE [DE]; BIRNBACH STEFAN [DE] ET AL.) 3. September 2009 (2009-09-03) | 1-9 | INV. C08J11/04 B01D61/14 |
| Y | * Ansprüche 11, 1, 3 * ----- | 10-15 | B01D61/16 |
| X | JP 2018 053176 A (HITACHI CHEMICAL CO LTD) 5. April 2018 (2018-04-05) * Absatz [0032] * ----- | 1 | |
| Y | WO 2021/211520 A1 (EASTMAN CHEM CO [US]) 21. Oktober 2021 (2021-10-21) * Absätze [0045], [0167] * ----- | 10-15 | |
| Y | US 2014/251897 A1 (LIVINGSTON ANDREW GUY [GB] ET AL) 11. September 2014 (2014-09-11) * Absatz [0016] * ----- | 10-15 | |
| Y | CN 113 248 668 A (UNIV ZHEJIANG) 13. August 2021 (2021-08-13) * Anspruch 1 * ----- | 10-15 | |

RECHERCHIERTE SACHGEBIETE (IPC)

C08J
C09J
B01D

Der vorliegende Recherchenbericht wurde für alle Patentansprüche erstellt

| Recherchenort | Abschlußdatum der Recherche | Prüfer |
|---|---|---|
| München | 7. Dezember 2022 | Hoyer, Michael |

## ANHANG ZUM EUROPÄISCHEN RECHERCHENBERICHT
## ÜBER DIE EUROPÄISCHE PATENTANMELDUNG NR.

EP 22 18 3494

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

07-12-2022

| Im Recherchenbericht angeführtes Patentdokument | Datum der Veröffentlichung | Mitglied(er) der Patentfamilie | Datum der Veröffentlichung |
|---|---|---|---|
| WO 2009106605 A1 | 03-09-2009 | BR PI0907545 A2 | 28-07-2015 |
| | | CA 2715313 A1 | 03-09-2009 |
| | | CN 101965340 A | 02-02-2011 |
| | | EA 201001325 A1 | 28-02-2011 |
| | | EP 2262788 A1 | 22-12-2010 |
| | | ES 2566544 T3 | 13-04-2016 |
| | | JP 5787523 B2 | 30-09-2015 |
| | | JP 2011513281 A | 28-04-2011 |
| | | KR 20100124769 A | 29-11-2010 |
| | | TW 200942321 A | 16-10-2009 |
| | | US 2011009645 A1 | 13-01-2011 |
| | | WO 2009106605 A1 | 03-09-2009 |
| JP 2018053176 A | 05-04-2018 | KEINE | |
| WO 2021211520 A1 | 21-10-2021 | CA 3174753 A1 | 21-10-2021 |
| | | CN 115427537 A | 02-12-2022 |
| | | WO 2021211520 A1 | 21-10-2021 |
| US 2014251897 A1 | 11-09-2014 | BR 112014009214 A2 | 18-04-2017 |
| | | CN 104010718 A | 27-08-2014 |
| | | CN 108176258 A | 19-06-2018 |
| | | EP 2768605 A1 | 27-08-2014 |
| | | ES 2833108 T3 | 14-06-2021 |
| | | JP 6121429 B2 | 26-04-2017 |
| | | JP 2014530103 A | 17-11-2014 |
| | | KR 20140085519 A | 07-07-2014 |
| | | SG 11201401589T A | 29-05-2014 |
| | | US 2014251897 A1 | 11-09-2014 |
| | | US 2020094198 A1 | 26-03-2020 |
| | | WO 2013057492 A1 | 25-04-2013 |
| CN 113248668 A | 13-08-2021 | KEINE | |

EPO FORM P0461

Für nähere Einzelheiten zu diesem Anhang : siehe Amtsblatt des Europäischen Patentamts, Nr.12/82